# EUROPÄISCHE PATENTSCHRIFT

(11) **EP 3 041 697 B1**
(45) Veröffentlichungstag und Bekanntmachung des Hinweises auf die Patenterteilung: **26.08.2020**
(21) Anmeldenummer: 14757907.2
(22) Anmeldetag: 26.08.2014
(51) Int. Cl.: B60J 7/00, B60J 1/20

(54) **WICKELVORRICHTUNG FÜR EINE ROLLOANORDNUNG, ROLLOANORDNUNG SOWIE DACHANORDNUNG**
WINDING DEVICE FOR A ROLLER BLIND ARRANGEMENT, ROLLER BLIND ARRANGEMENT AND ROOF ARRANGEMENT
DISPOSITIF D'ENROULEMENT POUR UN SYSTÈME DE STORE, SYSTÈME DE STORE ET DISPOSITIF DE TOIT

(30) Priorität: 05.09.2013 DE 102013109708
(43) Veröffentlichungstag der Anmeldung: 13.07.2016
(73) Patentinhaber: Webasto SE, 82131 Stockdorf (DE)
(72) Erfinder: SICHART, Thomas, 82287 Jesenwang (DE); HERTEL, Johann, 86899 Landsberg a. L. (DE); NOWAK, Manfred, 86859 Igling (DE)
(74) Vertreter: Epping - Hermann - Fischer
(86) Internationale Anmeldenummer: PCT/EP2014/068091
(87) Internationale Veröffentlichungsnummer: WO 2015/032655

(56) Entgegenhaltungen:
- EP-A2- 1 902 879
- DE-A1-102007 012 280
- DE-A1-102010 018 437
- DE-C1- 19 903 811

## Beschreibung

Die Erfindung betrifft eine Wickelvorrichtung für eine Rolloanordnung, insbesondere für ein Fahrzeug, welche ein Wickelelement aufweist. Des Weiteren betrifft die Erfindung eine Rolloanordnung mit einer solchen Wickelvorrichtung sowie eine Dachanordnung mit einer solchen Rolloanordnung.

Aus dem Stand der Technik sind Rolloanordnungen bekannt, welche in einem Fahrzeug angeordnet sind und bei welchen eine Rollobahn zu einem Rollowickel aufgewickelt wird. Hierzu weisen die Rolloanordnungen in der Regel eine Wickelvorrichtung auf, welche ausgebildet ist, die Rollobahn auf- und abzuwickeln.

Aus der EP 1 902 879 A2 ist eine Rolloanordnung, insbesondere zur Verwendung in einem Fahrzeug, bekannt. Die Rolloanordnung weist eine sich in einer Haupterstreckungsrichtung erstreckende, hohlrohrförmige Wickelwelle zur Aufnahme eines abziehbaren flexiblen Flächengebildes, eine in die Wickelwelle eingelegte und als Schraubenfeder ausgebildete Wickelfeder und ein Dämpfungsprofil auf, welches in einem Ringraum zwischen der Wickelwelle und der Wickelfeder angeordnet ist.

Aus der DE 199 03 811 C1 ist eine Wickelvorrichtung für eine Werkstoffbahn einer Rückhaltevorrichtung oder dergleichen eines Fahrzeugs, wie z. B. eines Kombinationskraftwagens, bekannt, welche mindestens eine einbaufeldseitig drehfest lösbar gehaltene Vorrichtungsachse mit einem die Vorrichtungsachse umgebenden Torsionsfederspeicher aufweist.

Aus der DE 10 2007 012280 A1 ist eine Rolloanordnung zur Aufnahme in einer Halterung, insbesondere zur Verwendung in einem Fahrzeug, mit einer sich in einer Haupterstreckungsrichtung erstreckenden hohlrohrförmigen Wickelwelle zur Aufnahme eines abziehbaren flexiblen Flächengebildes und einer in die Wickelwelle eingelegten Federanordnung bekannt.

Eine Aufgabe, welche der Erfindung zugrunde liegt, ist es, eine Wickelvorrichtung für eine Rolloanordnung, eine Rolloanordnung sowie eine Dachanordnung anzugeben, welche einen einfachen Aufbau verbunden mit niedrigen Kosten ermöglichen und sich durch eine hohe mechanische Stabilität auszeichnen.

Gemäß einem ersten Aspekt der Erfindung wird eine Wickelvorrichtung für eine Rolloanordnung, insbesondere für ein Fahrzeug, beschrieben, welche ein Wickelelement mit einer Längsachse aufweist. Das Wickelelement ist ausgebildet, drehbar um die Längsachse an einem Fahrzeug gelagert zu werden und eine Rollobahn auf- und abzuwickeln. Die Wickelvorrichtung weist des Weiteren eine Schraubenfeder mit einem sich axial erstreckenden Hohlraum auf, wobei das Wickelelement mittels der Schraubenfeder mit dem Fahrzeug gekoppelt ist und die Schraubenfeder eine Drehbewegung des Wickelelements relativ zu dem Fahrzeug ermöglicht. Zudem weist die Wickelvorrichtung ein in dem Hohlraum der Schraubenfeder angeordnetes Stabelement zum Führen der Schraubenfeder auf, wobei das Stabelement derart ausgebildet ist, dass das Stabelement die Schraubenfeder radial verspannt. Das Stabelement weist über eine Stablängsachse verteilt eine Mehrzahl von Berührpunkten mit der Schraubenfeder auf. Das Stabelement ist helix- und/oder spiralförmig ausgebildet oder das Stabelement ist wellenförmig ausgebildet.

Die Wickelvorrichtung gemäß dem ersten Aspekt sieht vor, dass in dem Hohlraum der Schraubenfeder ein Stabelement angeordnet ist. Das Stabelement hat einerseits die Funktion die Schraubenfeder zu führen, so dass die Schraubenfeder durch das innen liegende Stabelement in allen Betriebszuständen der Wickelvorrichtung mechanisch stabilisiert ist. Andererseits besitzt das Stabelement die Funktion, die Schraubenfeder radial zu verspannen.

Gegenüber einem lose oder locker in der Schraubenfeder angeordneten Stabelement, beispielsweise einem verschiebbar und/oder drehbar innerhalb des Hohlraums der Schraubenfeder angeordneten Stabelements, bietet das Stabelement gemäß dem ersten Aspekt den Vorteil, dass im Wesentlichen in allen Betriebszuständen der Wickelvorrichtung eine negative Geräuschentwicklung, beispielsweise ein Klappern der Wickelvorrichtung, vermindert ist. Dies liegt daran, dass das Stabelement in der Schraubenfeder im Wesentlichen fest und kraftschlüssig angeordnet ist. In anderen Worten ausgedrückt spreizt sich das Stabelement in dem Hohlraum der Schraubenfeder gegen diese. Insbesondere bei sehr hohen Geschwindigkeiten des Fahrzeugs, beispielsweise bis zu 250 km/h, oder aber auch bei starker Fahrzeuganregung, wie z. B. beim Fahren auf Schlechtweg oder ungünstiger Eigenfrequenz. kann so eine störende Geräuschentwicklung vermieden werden. Weiterhin ist die Wickelvorrichtung mechanisch sehr einfach ausgestaltet. Zudem bietet die Wickelvorrichtung den Vorteil, dass eine einfache Montage der Wickelvorrichtung möglich ist, da beispielsweise das Stabelement in einfacher Weise in den Hohlraum eingeschoben werden kann und keine weiteren Verbindungen mit dem Wickelelement oder einem Fahrzeug notwendig sind. Somit können jegliche Kosten für die Wickelvorrichtung selbst als auch für deren Montage erreicht werden.

Gemäß einer Ausgestaltung weist das Stabelement über eine Stablängsachse verteilt eine Mehrzahl von Berührpunkten mit der Schraubenfeder auf. Dies hat den Vorteil, dass das Stabelement die Schraubenfeder über die Mehrzahl der Berührpunkte verspannt. Bevorzugt besitzen die Berührpunkte unterschiedliche Umfangswinkel bezüglich der Stablängsachse, so dass die radiale Verspannung in verschiedene Raumrichtungen ausgehend von der Stablängsachse erreicht wird.

In einer weiteren Ausgestaltung besitzen die Berührpunkte des Stabelements in einem Zustand, in welchem das Stabelement nicht in dem Hohlraum der Schraubenfeder angeordnet ist, bezüglich der Stablängsachse einen radialen Abstand, welcher größer ist als ein halber Durchmesser eines geometrischen Querschnitts des Hohlraums der Schraubenfeder. Der Zustand kann auch als nicht montierter Zustand bezeichnet werden. Im Wesentlichen weist der Hohlraum der Schraubenfeder einen kreisrunden geometrischen Querschnitt auf. Das Stabelement dagegen weist bezüglich der Stablängsachse die Berührpunkte auf, welche unterschiedliche radiale Abstände zu der Stablängsachse aufweisen, wobei die radialen Abstände größer sind als ein halber Durchmesser beziehungsweise ein Radius des geometrischen Querschnitts des Hohlraums. Dadurch ist es möglich, die Schraubenfeder radial zu verspannen.

Das Stabelement ist helix- und/oder spiralförmig ausgebildet. In anderen Worten ausgedrückt weist das Stabelement einen geschwungenen und/oder gewundenen Verlauf bezüglich der Stablängsachse auf. Insbesondere ist eine Mittellinie eines geometrischen Querschnitts des Stabelements geschwungen beziehungsweise nicht gerade. Dadurch ist es möglich, dass das Stabelement verschiedene Berührpunkte beziehungsweise Anlagepunkte mit der Schraubenfeder aufweist und diese radial verspannt. In anderen Worten ausgedrückt weist das Stabelement in dem nicht montierten Zustand in mehreren Abschnitten eine Ausdehnung in radialer Richtung bezüglich einer Stablängsachse auf, welche größer als ein halber Durchmesser des geometrischen Querschnitts des Hohlraums der Schraubenfeder. Dabei ist es möglich, dass ein geometrischer Querschnitt des Stabelements kleiner ist als der geometrischer Querschnitt des Hohlraums der Schraubenfeder.

Alternativ ist das Stabelement wellenförmig ausgebildet.

Gemäß einer weiteren Ausgestaltung weist das Stabelement Verdickungen und/oder Vorsprünge auf. Die Verdickungen oder Vorsprünge stellen den Kontakt mit der Schraubenfeder her und verspannen diese radial.

Derartige Ausgestaltungen des Stabelements ermöglichen die vorstehenden Vorteile.

Gemäß einer weiteren Ausgestaltung ist das Wickelelement ein Rohrelement mit einem Hohlraum, und die Schraubenfeder ist in dem Hohlraum des Wickelelements angeordnet. Dies bietet den Vorteil, dass das rohrförmige Wickelelement einen äußeren Schutz, beispielsweise gegen Verschleiß, für die Schraubenfeder bildet.

Gemäß einer weiteren Ausgestaltung weist die Wickelvorrichtung weiter ein Lagerelement auf, das fest mit dem Fahrzeug koppelbar ist, wobei das Wickelelement an dem Lagerelement drehbar gelagert ist und mittels der Schraubenfeder mit dem Lagerelement gekoppelt ist. Dadurch ist es möglich, dass das Wickelelement mechanisch sicher über das Lagerelement drehbar an dem Fahrzeug gelagert werden kann. Dadurch, dass das Wickelelement zusätzlich über die Schraubenfeder mit dem Lagerelement gekoppelt ist, lässt sich bei einer Aufwickel- oder Abwickeldrehbewegung des Wickelelements die Schraubenfeder vorspannen.

Gemäß einem zweiten Aspekt der Erfindung wird eine Rollanordnung beschrieben, welche eine Wickelvorrichtung gemäß dem ersten Aspekt aufweist. Die Rollanordnung weist des Weiteren eine Rollobahn auf, welche mechanisch fest mit dem Wickelelement gekoppelt ist.

Die Rolloanordnung gemäß dem zweiten Aspekt ermöglicht die vorgenannten Vorteile im Wesentlichen.

Gemäß einem dritten Aspekt der Erfindung wird eine Dachanordnung für ein Fahrzeug mit einer transparenten Dachscheibe beschrieben, welche eine Rolloanordnung gemäß dem zweiten Aspekt der Erfindung aufweist, wobei die Rolloanordnung im Bereich der Dachscheibe zum zumindest teilweisen Abdecken der Dachscheibe angeordnet ist.

Die Dachanordnung gemäß dem dritten Aspekt der Erfindung ermöglicht im Wesentlichen die vorgenannten Vorteile.

Weitere vorteilhafte Ausgestaltungen der Erfindung sind in der nachfolgenden Beschreibung eines Ausführungsbeispieles erläutert.

Nachfolgend wird die Erfindung anhand des Ausführungsbeispiels mit Hilfe der angehängten Figuren ausführlich beschrieben.

In den Figuren zeigen:
- Figur 1: eine perspektivische Ansicht einer Dachanordnung eines Fahrzeugs,
- Figur 2: einen Längsschnitt der Wickelvorrichtung,
- Figur 3: eine Detailansicht des Längsschnitts,
- Figur 4: einen Querschnitt durch die Detailansicht gemäß Figur 3,
- Figur 5: eine perspektivische Ansicht einer Wickelvorrichtung für die Dachanordnung und
- Figur 6: eine perspektivische Ansicht eines Stabelements der Wickelvorrichtung.

Elemente gleicher Konstruktion oder Funktion sind figurenübergreifend mit den gleichen Bezugszeichen gekennzeichnet.

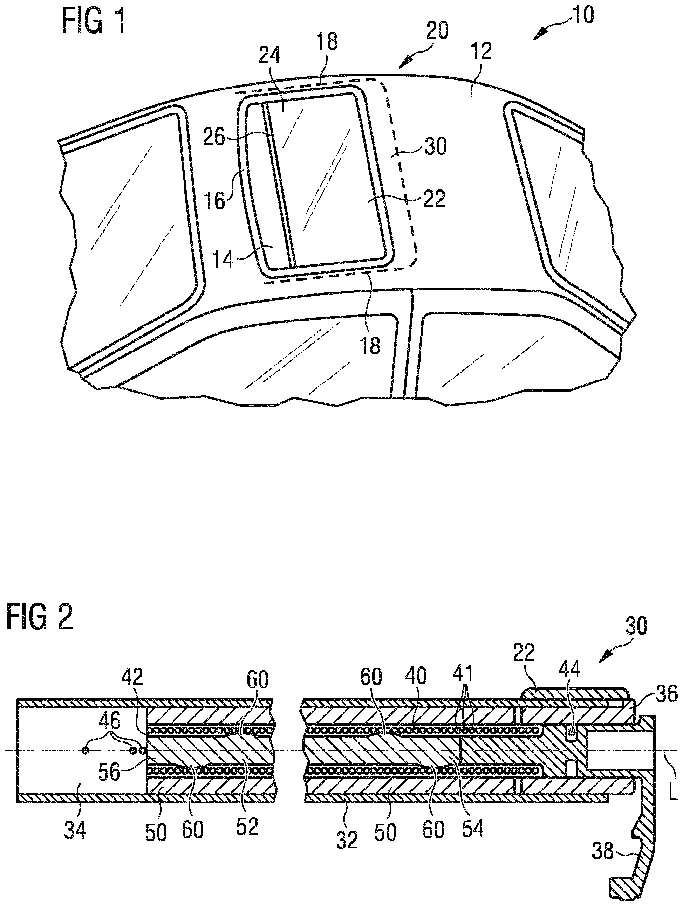

In Figur 1 ist ein Fahrzeug 10 mit einer Dachanordnung dargestellt, welche ein Fahrzeugdach 12 aufweist, das mit einer Dachöffnung 14 versehen ist. Die Dachöffnung 14 ist mittels eines verschiebbaren Schiebedachdeckels, beispielsweise einer transparenten Dachscheibe, wahlweise verschlossen oder zumindest teilweise freigebbar. Alternativ kann die Dachöffnung 14 auch mittels einer festen angeordneten, also nicht verschiebbaren transparenten Dachscheibe verschlossen. Die Dachöffnung 14 wird von einem am Fahrzeugdach 12 ausgebildeten Dachöffnungsrahmen 16 begrenzt. Der Dachöffnungsrahmen 16 hat vorzugsweise beidseitig angeordnete Führungsschienen 18, in denen unterhalb des verschiebbaren Schiebedachdeckels eine Rolloanordnung 20 angeordnet ist.

Die Rolloanordnung 20 weist eine Rollobahn 22 auf, die, bezogen auf das Fahrzeug 10, nach vorne in einer Abwickelrichtung und nach hinten in einer der Abwickelrichtung entgegen gesetzten Richtung verschoben werden kann. Ist die Rollobahn 22 vollständig nach hinten geschoben, so ist die Dachöffnung 14 beziehungsweise der Schiebedachdeckel oder die Dachscheibe vollständig freigegeben. In einem vollständig freigegebenen Zustand können Sonnenlicht und/oder Umgebungsluft ungehindert in den Fahrzeuginnenraum über die Dachöffnung 14 gelangen. Ist die Rollobahn 22 dagegen vollständig nach vorne geschoben, so ist die Dachöffnung 14 durch die Rollobahn abgedeckt, so dass direktes Sonnenlicht und/oder Umgebungsluft nur teilweise in den Fahrzeuginnenraum gelangen können.

An einem Ende der Rollobahn 22, das bezüglich der Fahrzeuglängsrichtung das hintere Ende der Rollobahn 22 ist, kann die Rollobahn 22 vollständig aufgewickelt sein. An einem weiteren Ende 24 der Rollobahn, das bezüglich der Fahrzeuglängsrichtung das vordere Ende der Rollobahn ist, ist ein Zugspriegel 26 angeordnet, den ein Fahrzeuginsasse manuell oder elektrisch betätigen kann, um so die Rollobahn 22 nach vorne oder nach hinten zu schieben beziehungsweise zu ziehen.

In einem Bereich des hinteren Endes der Dachöffnung 14 ist eine Wickelvorrichtung 30 angeordnet, die in den Figuren 2 bis 6 detailliert nachfolgend beschrieben wird.

Figur 2 zeigt einen Längsschnitt durch die Wickelvorrichtung 30. Die Wickelvorrichtung 30 besitzt ein Wickelelement 32 mit einer Längsachse L. Das Wickelelement 32 ist vorzugsweise als Rohrelement mit einem Hohlraum 34 ausgebildet. Vorzugsweise kann die Rollobahn 22 auf dem rohrförmigen Wickelelement 32 auf- und abgewickelt werden. In einem aufgewickelten Zustand bildet die Rollobahn 22 einen Rollowickel.

Die Wickelvorrichtung 30 hat weiter eine Lagerbuchse 36, die an einem axialen Ende des rohrförmigen Wickelelements 32 angeordnet und mit dem Wickelelement 32 fest gekoppelt ist.

Die Wickelvorrichtung 30 hat weiter mindestens ein Lagerelement 38, das beispielsweise fest mit dem Dachöffnungsrahmen 16 des Fahrzeugs 10 verbunden ist. Das Lagerelement 38 kann auch an einem anderen Teil des Fahrzeugs 10, beispielsweise an einem Fenster- oder Türrahmen oder am Rand einer Öffnung eines anderen Bauteils des Fahrzeugs 10 befestigt sein. Das Wickelelement 32 ist über die Lagerbuchse 36 an dem Lagerelement 38 drehbar gelagert bezüglich der Längsachse L.

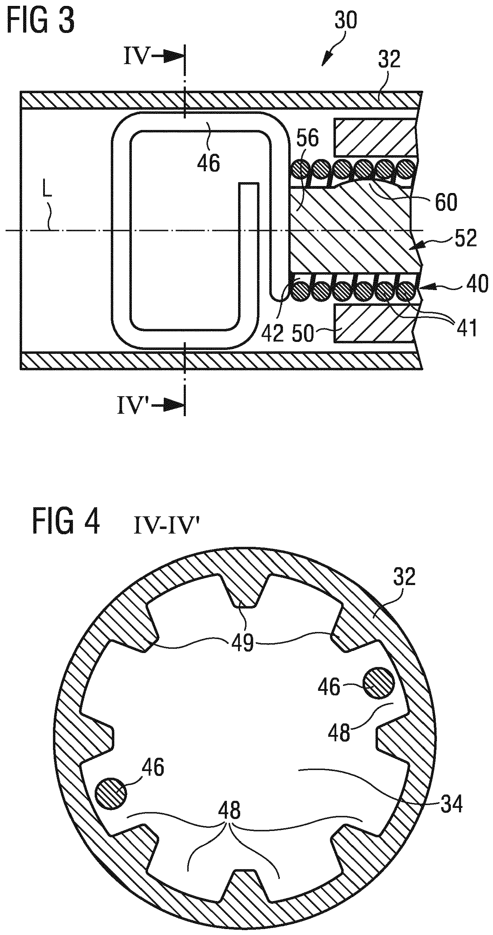

Die Wickelvorrichtung 30 hat eine Schraubenfeder 40. Die Schraubenfeder 40 besitzt eine Vielzahl von Wicklungen 41. Die Schraubenfeder 40 ist in dem Hohlraum 34 des rohrförmigen Wickelelements 32 angeordnet. Die Schraubenfeder 40 hat einen Hohlraum 42 sowie einen ersten Federendabschnitt 44 und einen zweiten Federendabschnitt 46. Der erste Federendabschnitt 44 und der zweite Federendabschnitt 46 sind an zwei axial entgegengesetzten Enden der Schraubenfeder 40 angeordnet. Der erste Federendabschnitt 44 ist fest mit dem Lagerelement 38 gekoppelt. Der zweite Federendabschnitt 46 ist vorzugsweise rechteckförmig ausgebildet (siehe Figur 3). Der zweite Federendabschnitt 46 kann auch separat von den übrigen Teilen der Schraubenfeder 40 ausgebildet sein. Dies hätte den Vorteil, dass die Reihenfolge bei der Montage der Wickelvorrichtung 30 im Bedarfsfall geändert werden könnte. Insbesondere ist der Federendabschnitt 46, der als rechteckförmiger Rahmen ausgebildet ist, im Bereich der Längsachse L des Wickelelements 32 angeordnet.

Wie anhand von Figur 4 dargestellt ist, sind in dem Wickelelement 32 Ausnehmungen 48 angeordnet, die bevorzugt nutförmig ausgebildet sind. Die Ausnehmungen 48 des Wickelelements 32 sind vorzugsweise durch Stege 49 voneinander getrennt. Der zweite Federendabschnitt 46 ist derart in dem Hohlraum 34 des Wickelelements 32 angeordnet, dass zwei Seitenabschnitte des rechteckförmigen zweiten Federendabschnitts 46 in zwei nutförmige Ausnehmungen 48 des Wickelelements 32 eingreifen. Damit ist der rechteckförmige zweite Federendabschnitt 46 derart mit dem Wickelelement 32 gekoppelt, dass bei einer Drehung des Wickelelements 32 um die Längsachse L, insbesondere durch Auf- oder Abwickeln der Rollobahn 22, der zweite Federendabschnitt 46 der Schraubenfeder 40 von dem Wickelelement 32 in Drehung versetzt werden kann. Damit kann bei einer Rotationsbewegung des Wickelelements 32 um die Längsachse L ein Verspannen oder Entspannen der Schraubenfeder 40 ermöglicht werden.

Radial zwischen der Schraubenfeder 40 und dem röhrförmigen Wickelelement 32 ist ein Dämpfungselement 50 angeordnet. Das Dämpfungselement 50 besteht vorzugsweise ganz oder teilweise aus einem Kunststoff, insbesondere einem Elastomerwerkstoff. Mittels des Dämpfungselements 50 kann ein direkter Kontakt zwischen der Schraubenfeder und dem Wickelelement 32 im Bereich der Wicklungen 41 verhindert werden. Damit kann das Dämpfungselement 50 einen wirksamen Beitrag zur Geräuschdämmung der Wickelvorrichtung 30 leisten.

In dem Hohlraum 42 der Schraubenfeder 40 ist ein Stabelement 52 angeordnet. Das Stabelement ist vorzugsweise über einen wesentlichen Teil der axialen Länge der Schraubenfeder 40 im Bereich der Wicklungen 41 angeordnet, so dass das Stabelement 52 die Schraubenfeder 40 besonders gut führen kann. Das Stabelement 52 hat einen ersten Stabendabschnitt 54 und einen zweiten Stabendabschnitt 56, welche an zwei axialen, entgegengesetzten Enden des Stabelements 52 angeordnet sind. Der erste Stabendabschnitt 54 liegt an dem Lagerelement 38 an. Der zweite Stabendabschnitt 58 liegt an dem rahmenförmigen zweiten Federendabschnitt 46 der Schraubenfeder 40 an, wie dies anhand der Figuren 2 und 3 dargestellt ist. Durch das Anliegen des Stabelements 52 im Bereich der Stabendabschnitte 54, 56 an dem Lagerelement 38 und an dem zweiten Federendabschnitt 56 wird erreicht, dass die Bewegung des Stabelements 52 in Richtung der Längsachse L begrenzt ist. Dadurch kann sichergestellt werden, dass das Stabelement 52 im Wesentlichen immer in einer gegenüber der Schraubenfeder 50 identischen axialen Position verbleibt. Damit kann sichergestellt werden, dass das Stabelement 52 die Schraubenfeder 40 führen kann.

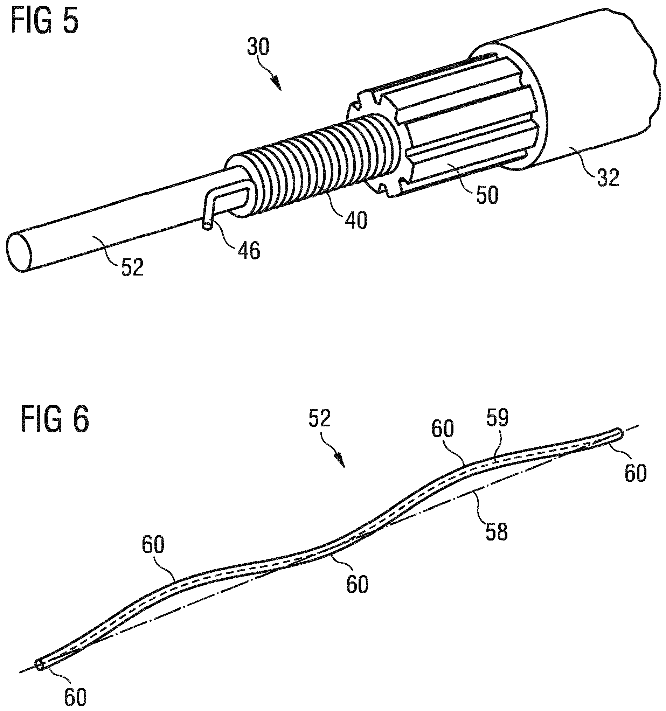

In Figur 5 ist die Wickelvorrichtung 30 in einer teilweisen Explosionsdarstellung gezeigt. Dabei ist deutlich zu erkennen, dass das Wickelelement 32 das Dämpfungselement 50 umgibt. Innerhalb des Dämpfungselements 50 ist die Schraubenfeder 40 und das Stabelement 52 angeordnet. Dabei ist auch der zweite Federendabschnitt 46 gezeigt.

Das Stabelement 52 besteht vorzugsweise aus Polyoxymethylen oder weist Polyoxymethylen auf. Polyoxymethylen ist ein mechanisch sehr stabiles Material und weist eine hohe Bruchfestigkeit auf.

Wie anhand von Figur 6 dargestellt ist, ist das Stabelement 52 spiralförmig ausgebildet. Dies bedeutet, dass das Stabelement 52 an Außenseiten bezüglich einer Stablängsachse 58, welche Mittelpunkte geometrischer Querschnitte des ersten Stabendabschnitts 54 und des zweiten Stabendabschnitts 56 verbindet, unterschiedliche Abstände zu der Stablängsachse 58 aufweist. In anderen Worten ausgedrückt besitzt das Stabelement 52 eine Mittellinie 59 eines Querschnittsverlaufs bezüglich der Stablängsachse 58, welche geschwungen ist und nicht mit der Stablängsachse 58 zusammenfällt. Der geometrische Querschnitt des Stabelements 58 ist bezüglich einer Länge des Stabelements 52 im Wesentlichen gleich und kreisförmig. Durch die Spiralform spreizt sich das Stabelement 52 gegen die Schraubfeder 40 und verspannt die Wickelvorrichtung 30 in sich. Durch die spiralförmige Ausgestaltung des Stabelements 52 wird ein dreidimensionales Anliegen des Stabelements 52 innerhalb der Schraubenfeder 40 erreicht, so dass die Schraubenfeder 40 radial verspannt ist. Somit wird einem Klappern der Wickelvorrichtung 30, insbesondere bei hohen Geschwindigkeiten bis zu 250 km/h vorgebeugt. Somit kann es praktisch nicht zu einer störenden Geräuschentwicklung kommen.

Durch die spiralförmige Ausgestaltung des Stabelements 52 weist das Stabelement 52 mehrere Berührpunkte 60 mit der Schraubenfeder 40 auf, wie anhand der Figuren 2 und 6 gezeigt. In einem nicht montierten Zustand des Stabelements 52, also wenn das Stabelement 52 nicht in den Hohlraum 42 der Schraubenfeder 40 eingesteckt oder eingeführt ist, haben die Berührpunkte 60 bezüglich der Stablängsachse 58 einen größeren radialen Abstand als ein halber Durchmesser bzw. ein Radius des Hohlraums 42 der Schraubenfeder. Bezogen auf die Längsachse L des Wickelelements 32 weisen die Berührpunkte 60 somit einen größeren radialen Abstand zu der Längsachse L auf als ein halber Durchmesser des Hohlraums 42 der Schraubenfeder 40. Die Berührpunkte 60 haben bezüglich der Stablängsachse 58 bzw. der Längsachse L des Wickelelements 32 unterschiedliche Umfangswinkel, so dass die Verspreizung oder das Verspannen in unterschiedliche Raumrichtungen erfolgt.

Beim Einbringen des Stabelements 52 in den Hohlraum 42 der Schraubenfeder 40 ist somit zur Montage das Aufbringen einer Kraft notwendig. Dies liegt daran, dass das Stabelement 52 die Schraubenfeder 40 radial verspannt und bei der Montage somit eine Reibkraft überwunden werden muss. Im montierten Zustand spreizt das Stabelement 52 die Schraubenfeder 40 radial nach außen und verspannt diese somit.

Alternativ kann das Stabelement 52 auch wellenförmig oder helixförmig ausgestaltet sein. Alternativ oder zusätzlich kann das Stabelement 52 auch Vorsprünge oder Fertigungen aufweisen, welche ebenfalls für die radiale Verspannung der Schraubenfeder 40 sorgen.

Abhängig von einem Spannungszustand der Schraubenfeder 40 ändern sich sowohl die Länge der Schraubenfeder 40 in Richtung der Längsachse L als auch deren Durchmesser. So ist bei einer vollständig ausgezogenen, als von der Wickelvorrichtung 30 abgewickelten Rollobahn 22 die Länge der Schraubenfeder 40 maximal und der Durchmesser der Schraubenfeder 40 minimal. Dagegen ist bei einer vollständig aufgewickelten Rollobahn 22 die Länge der Schraubenfeder 40 minimal und der Durchmesser der Schraubenfeder 40 maximal. Das Stabelement 52 ist vorzugsweise derart dimensioniert, dass die Schraubenfeder 40 auch bei maximaler Länge der Schraubenfeder 40 durch das Stabelement 52 sicher geführt und stabilisiert werden kann. Das Stabelement 52 ist des Weiteren vorzugsweise derart dimensioniert, dass der radiale Abstand der Berührpunkte 60 in dem oben beschriebenen nicht montierten Zustand stets größer als der halbe Durchmesser des Hohlraums 42 der Schraubenfeder 40 im nicht montierten Zustand ist. Damit soll verhindert werden, dass bei einer Änderung des Durchmessers der Schraubenfeder 40 das Stabelement 52 lose in der Schraubenfeder 40 aufgenommen ist, was zu einem Klappern und negativen Geräuschentwicklungen führen würde.

Die anhand des Ausführungsbeispiels beschriebenen Wickelvorrichtung 30 kann neben der Dachanordnung für ein Fahrzeug auch in anderen Anordnungen vorgesehen sein. Solche anderen Anordnungen sind beispielsweise Rolloanordnungen für Glasdächer in Gebäuden, insbesondere in Wintergärten oder an Hausdächern. Die Rollobahnen müssen zudem nicht notwendiger Weise dem Sonnenschutz dienen, sondern können auch beispielsweise als Mückenschutzgitter verwendet werden.

Die Erfindung ist nicht auf das angegebene Ausführungsbeispiel beschränkt.

Insbesondere entscheidend ist, dass das Stabelement 58 in den beschriebenen Ausgestaltungen verwendet wird, so dass die radiale Verspannung der Schraubenfeder 40 erreicht wird. Die konstruktive Ausgestaltung der Wickelvorrichtung 30, welche anhand der Figuren 2 bis 6 beschrieben ist, ist lediglich beispielhaft zu sehen und kann andere konstruktive Ausgestaltungen und Anordnungen aufweisen.

### Bezugszeichenliste

- 10: Fahrzeug
- 12: Fahrzeugdach
- 14: Dachöffnung
- 16: Dachöffnungsrahmen
- 18: Führungsschiene
- 20: Rolloanordnung
- 22: Rollobahn
- 24: Ende
- 26: Zugspriegel
- 30: Wickelvorrichtung
- 32: Wickelelement
- 34: Hohlraum
- 36: Lagerbuchse
- 38: Lagerelement
- 40: Schraubenfeder
- 42: Hohlraum
- 44: erster Federendabschnitt
- 46: zweiter Federendabschnitt
- 48: Ausnehmung
- 49: Steg
- 50: Dämpfungselement
- 52: Stabelement
- 54: erster Stabendabschnitt
- 56: zweiter Stabendabschnitt
- 58: Stablängsachse
- 59: Mittellinie
- 60: Berührpunkt
- L: Längsachse

## Patentansprüche

1. Wickelvorrichtung (30) für eine Rolloanordnung (20), insbesondere für ein Fahrzeug (10), aufweisend
- ein Wickelelement (32) mit einer Längsachse (L), welches ausgebildet ist, drehbar um die Längsachse (L) an einem Fahrzeug (10) gelagert zu werden und eine Rollobahn (22) auf- und abzuwickeln;
- eine Schraubenfeder (40) mit einem sich axial erstreckenden Hohlraum (42), wobei das Wickelelement (32) mittels der Schraubenfeder (40) mit dem Fahrzeug (10) gekoppelt ist und die Schraubenfeder (40) eine Drehbewegung des Wickelelements (32) relativ zu dem Fahrzeug (10) ermöglicht; und
- ein in dem Hohlraum (42) der Schraubenfeder (40) angeordnetes Stabelement (52) zum Führen der Schraubenfeder (40), wobei das Stabelement (52) derart ausgebildet ist, dass das Stabelement (52) die Schraubenfeder (40) radial verspannt, **dadurch gekennzeichnet dass**
das Stabelement (52) über eine Stablängsachse (58) verteilt eine Mehrzahl von Berührpunkten (60) mit der Schraubenfeder (40) aufweist, und
dass das Stabelement (52) bezüglich der Stablängsachse (58) helix- und/oder spiralförmig ausgebildet ist oder wobei das Stabelement (52) bezüglich der Stablängsachse (58) wellenförmig ausgebildet ist.

2. Wickelvorrichtung (30) nach Anspruch 1, wobei die Berührpunkte (60) des Stabelements (52) in einem Zustand, in welchem das Stabelement (58) nicht in dem Hohlraum (42) der Schraubenfeder (40) angeordnet ist, bezüglich der Stablängsachse (58) einen radialen Abstand besitzen, welcher größer ist als ein halber Durchmesser eines geometrischen Querschnitts des Hohlraums (42) der Schraubenfeder (40).

3. Wickelvorrichtung (30) nach einem der vorhergehenden Ansprüche, wobei das Stabelement (52) Verdickungen und/oder Vorsprünge aufweist.

4. Wickelvorrichtung (30) nach einem der vorhergehenden Ansprüche, wobei das Wickelelement (32) ein Rohrelement mit einem Hohlraum (34) ist, und die Schraubenfeder (40) in dem Hohlraum des Wickelelements (32) angeordnet ist.

5. Wickelvorrichtung (30) nach einem der vorhergehenden Ansprüche, weiter aufweisend ein Lagerelement (38), welches fest mit dem Fahrzeug (10) koppelbar ist, wobei das Wickelelement (32) an dem Lagerelement (38) drehbar gelagert ist und mittels der Schraubenfeder (40) mit dem Lagerelement (38) gekoppelt ist.

6. Rolloanordnung (20) mit
- einer Wickelvorrichtung (30) nach einem der vorhergehenden Ansprüche, und
- einer Rollobahn (22), die mechanisch fest mit dem Wickelelement (32) gekoppelt ist.

7. Dachanordnung für ein Fahrzeug (10) mit
- einer transparenten Dachscheibe, und
- einer Rolloanordnung (20) nach Anspruch 6, wobei die Rolloanordnung (20) im Bereich der Dachscheibe zum zumindest teilweisen Abdecken der Dachscheibe angeordnet ist.

## Claims

1. Winding device (30) for a roller blind arrangement (20), in particular for a vehicle (10), having
- a winding element (32) having a longitudinal axis (L), which is constructed to be rotatably supported about the longitudinal axis (L) on a vehicle (10) and to wind and unwind a roller blind web (22);
- a helical spring (40) having an axially extending hollow space (42), wherein the winding element (32) is connected to the vehicle (10) by means of the helical spring (40) and the helical spring (40) enables a rotational movement of the winding element (32) relative to the vehicle (10); and
- a rod element (52) which is arranged in the hollow space (42) of the helical spring (40) for guiding the helical spring (40), wherein the rod element (52) is constructed in such a manner that the rod element (52) radially tensions the helical spring (40),
**characterized in that** the rod element (52) has in a state distributed over a longitudinal rod axis (58) a plurality of contact locations (60) with the helical spring (40), and **in that** the rod element (52) is constructed in a helical and/or spiral manner in respect of the longitudinal rod axis (58) or wherein the rod element (52) is constructed in an undulating manner in respect of the longitudinal rod axis (58).

2. Winding device (30) according to Claim 1, wherein the contact locations (60) of the rod element (52), in a state in which the rod element (58) is not arranged in the hollow space (42) of the helical spring (40), has with respect to the longitudinal rod axis (58) a radial spacing which is greater than half a diameter of a geometric cross section of the hollow space (42) of the helical spring (40).

3. Winding device (30) according to any one of the preceding claims, wherein the rod element (52) has thickened portions and/or projections.

4. Winding device (30) according to any one of the preceding claims, wherein the winding element (32) is a pipe element having a hollow space (34) and the helical spring (40) is arranged in the hollow space of the winding element (32).

5. Winding device (30) according to any one of the preceding claims, further having a bearing element (38), which can be securely connected to the vehicle (10), wherein the winding element (32) is rotatably supported on the bearing element (38) and is connected to the bearing element (38) by means of the helical spring (40).

6. Roller blind arrangement (20) having
- a winding device (30) according to any one of the preceding claims, and
- a roller blind web (22) which is connected to the winding element (32) in a mechanically secure manner.

7. Roof arrangement for a vehicle (10) having
- a transparent roof panel, and
- a roller blind arrangement (20) according to Claim 6,
wherein the roller blind arrangement (20) is arranged in the region of the roof panel in order to at least partially cover the roof panel.

## Revendications

1. Dispositif d'enroulement (30) pour un arrangement de store (20), notamment pour un véhicule (10), comprenant
- un élément d'enroulement (32) ayant un axe longitudinal (L), qui est configuré pour être supporté à rotation autour de l'axe longitudinal (L) au niveau d'un véhicule (10) et enrouler et dérouler une bande de store (22) ;
- un ressort hélicoïdal (40) ayant un espace creux (42) qui s'étend dans le sens axial, l'élément d'enroulement (32) étant couplé au véhicule (10) au moyen du ressort hélicoïdal (40) et le ressort hélicoïdal (40) rendant possible un mouvement de rotation de l'élément d'enroulement (32) par rapport au véhicule (10) ; et
- un élément formant tige (52), disposé dans l'espace creux (42) du ressort hélicoïdal (40) et destiné à guider le ressort hélicoïdal (40), l'élément formant tige (52) étant configuré de telle sorte que l'élément formant tige (52) tend le ressort hélicoïdal (40) dans le sens radial,
**caractérisé en ce que**
l'élément formant tige (52) possède une pluralité de points de contact (60) avec le ressort hélicoïdal (40), répartis sur un axe longitudinal de tige (58), et
**en ce que** l'élément formant tige (52) est de configuration en hélice et/ou en spirale en référence à l'axe longitudinal de tige (58) ou l'élément formant tige (52) est de configuration ondulée en référence à l'axe longitudinal de tige (58).

2. Dispositif d'enroulement (30) selon la revendication 1, les points de contact (60) de l'élément formant tige (52), dans un état dans lequel l'élément formant tige (58) n'est pas disposé dans l'espace creux (42) du ressort hélicoïdal (40), possédant en référence à l'axe longitudinal de tige (58) un écart radial qui est supérieur à un demi-diamètre d'une section transversale géométrique de l'espace creux (42) du ressort hélicoïdal (40) .

3. Dispositif d'enroulement (30) selon l'une des revendications précédentes, l'élément formant tige (52) possédant des épaississements et/ou des parties saillantes.

4. Dispositif d'enroulement (30) selon l'une des revendications précédentes, l'élément d'enroulement (32) étant un élément tubulaire ayant un espace creux (34) et le ressort hélicoïdal (40) étant disposé dans l'espace creux de l'élément d'enroulement (32).

5. Dispositif d'enroulement (30) selon l'une des revendications précédentes, comprenant en outre un élément palier (38) qui peut être accouplé à demeure avec le véhicule (10), l'élément d'enroulement (32) étant monté à rotation sur l'élément palier (38) et étant accouplé à l'élément palier (38) au moyen du ressort hélicoïdal (40).

6. Arrangement de store (20) comprenant
- un dispositif d'enroulement (30) selon l'une des revendications précédentes et
- une bande de store (22) qui est couplée mécaniquement à demeure au dispositif d'enroulement (32).

7. Arrangement de toit pour un véhicule (10) comprenant
- une vitre de toit transparente et
- un arrangement de store (20) selon la revendication 6, l'arrangement de store (20) étant disposé dans la zone de la vitre de toit en vue de recouvrir au moins partiellement la vitre de toit.
